# EUROPÄISCHE PATENTSCHRIFT

(11) **EP 0 967 495 B1**
(45) Veröffentlichungstag und Bekanntmachung des Hinweises auf die Patenterteilung: **08.11.2006**
(21) Anmeldenummer: 99110481.1
(22) Anmeldetag: 31.05.1999
(51) Int. Cl.: G01V 8/12, G01V 8/20, A01D 41/12

(54) **Landwirtschaftlicher Mähdrescher mit volumetrischem Sensor**
Agricultural harvester with volumetric sensor
Moissonneuse-batteuse avec capteur volumétrique

(30) Priorität: 23.06.1998 US 102928
(43) Veröffentlichungstag der Anmeldung: 29.12.1999
(73) Patentinhaber: DEERE & COMPANY, Moline, Illinois 61265-8098 (US)
(72) Erfinder: Skarie, Christopher Jason, Audubon, Minnesota 56511 (US); Harden, Philip Alan, Colona, Illinois 61241 (US); Mahin-Fallah, Ahmad, Fargo, North Dakota 58102 (US)
(74) Vertreter: Magin, Ludwig Bernhard

(56) Entgegenhaltungen:
- DE-A- 19 543 343
- GB-A- 2 088 808
- GB-A- 2 278 916
- US-A- 4 360 998

## Beschreibung

Die Erfindung betrifft einen landwirtschaftlichen Mähdrescher mit einem Förderer, durch den geerntetes Material gefördert wird, und einem volumetrischen Sensor zum Erfassen von im Förderer geförderten Materialvolumina, der wenigstens zwei gegenüberliegende Einheiten aufweist, die an gegenüberliegenden Seiten einer Umhüllung des Förderers montiert sind und Lichtschranken bilden.

Mähdrescher sind große landwirtschaftliche Maschinen, die verwendet werden, um Gut von einem Feld zu ernten. Nachdem das Gut mit einem Erntevorsatz geerntet ist, wird es durch einen Schrägförderer in das Innere des Mähdreschers transportiert. Eine Drescheinrichtung drischt das geerntete Gut, wobei das Korn von anderem Getreide und/oder einer Hülse getrennt wird. Danach trennt eine Trenneinrichtung das saubere Korn von dem Erntegut, das nicht Korn ist. Letzteres wird auf das Feld zurück verbracht, während Korn und mitgerissene kleine Teilchen, Spreu, einer Reinigungseinrichtung zugeführt werden. Die Reinigungseinrichtung reinigt das Korn und entfernt die Spreu, indem die Spreu zur Rückseite des Mähdreschers hinaus geblasen wird. Das saubere Korn wird durch einen Elevator für sauberes Korn in einen am Mähdrescher angeordneten Korntank transportiert.

Es wurden photoelektrische Sensoren zum Messen des Volumens sauberen Korns, die den Elevator für sauberes Korn durchlaufen, vorgeschlagen, siehe DE 2 445 046 A. Weitere optische Sensoren für gefördertes Korn werden in der nachveröffentlichten EP 931 445 A, in Peter Reitz: "Untersuchungen zur Ertragskartierung während der Getreideernte mit dem Mähdrescher"; Dissertation, erschienen im Selbstverlag Stuttgart 1997, ISSN 0931-6264 als FORSCHUNGSBERICHT AGRARTECHNIK des Arbeitskreises Forschung und Lehre der Max-Eyth-Gesellschaft Agrartechnik im VDI (VDI-MEG) mit der Nr. 305 sowie in Dohn W. Pfeiffer, John W. Hummel, Norman R. Miller: "Real-Time Corn Yield Sensor", eine ASAE/CSAE Meeting Presentation, Paper No. 93 1013, UILUENG 93-7003 beschrieben. Diese Sensoren arbeiten mit mehreren orthogonal zueinander angeordneten Lichtschranken, die jeweils eine Lichtquelle und einen Photodetektor umfassen (EP 0 931 445 A und Reitz), bzw. mit einer einzigen Lichtquelle und mehreren Photodioden (DE 2 445 046 A sowie Pfeiffer et al.).

Gelegentlich durchläuft sauberes Korn, ungedroschene Getreideähren und anderes Erntegut die Siebe der Reinigungseinrichtung und wird Überkehr. Diese Überkehr wird aufgefangen, bevor sie aus dem Mähdrescher ausgestoßen wird. Die Überkehr wird der Drescheinrichtung durch einen Überkehr-Elevator zurückgeführt. Photodiodensensoren zur Messung des Volumens der Überkehr, die den Überkehr-Elevator durchläuft, wurden ebenfalls vorgeschlagen, s. US 4 441 513.

Die GB 2 278 916 A beschreibt ein System zur Erfassung von Eindringlingen in ein zu schützendes Gebiet. Es umfasst an Pfosten angebrachte Sender mit Lasern und an gegenüberliegenden Pfosten angebrachte Photodetektoren. Jeder Sender beaufschlagt mehrere, jedoch nicht alle Photodetektoren des gegenüberliegenden Pfostens mit Licht. Aus dem an den Photodetektoren nachgewiesenen Abschattungsmuster eines eventuellen Eindringlings wird dessen Profil errechnet. Diese Druckschrift bezieht sich nicht auf eine Volumenmessung von Material an einem Förderer. Außerdem ist auf jeder Seite eines möglichen Durchgangs entweder ein Photodetektor oder ein Laser angeordnet. Da die Sender nicht alle gegenüberliegenden Photodetektoren beaufschlagen, ist davon auszugehen, dass genauso viele Laser wie abgehende Strahlen vorhanden sind. Im Ergebnis ist die dort vorgeschlagene Anordnung sehr aufwendig.

Das der Erfindung zugrunde liegende Problem wird darin gesehen, einen Sensor zur Detektion des Volumens von Material, das durch einen Förderer transportiert wird, bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird das Material, dessen Volumen zu erfassen ist, durch Laser von zwei Seiten beleuchtet und das Laserlicht mittels Photodetektoren auf der dem Laser jeweils gegenüberliegenden Seite mittels wenigstens zweier Photodetektoren detektiert. Es sind somit zwei beidseits eines Materialstroms positionierte Einheiten vorhanden, die jeweils einen Laser und wenigstens zwei Photodetektoren aufweisen. Anhand des Signals der Photodetektoren ist feststellbar, ob die Photodetektoren durch vorbeigefördertes Material abgeschirmt werden oder nicht, so daß errechnet werden kann, wieviel Material am Sensor vorbeigeführt wird. Die Erfindung wird verwendet, um mit Mähdreschern geerntete Materialmengen erfassen und ortsspezifisch kartieren zu können.

Der Sensor ist an gegenüberliegenden Seiten der Umhüllung eines Förderers, insbesondere eines Paddelelevators, montiert. Er kann aber auch an beliebigen anderen Förderern, wie Schneckenförderern verwendet werden, die hinreichenden Platz zur Anbringung des Sensors aufweisen. Die Orientierung des Förderers ist beliebig.

Der Laser, vorzugsweise ein Festkörperlaser, wie eine Laserdiode, kann vorteilhafterweise oberhalb der Photodetektoren positioniert sein, da das zu erfassende Material in der Regel aufgrund der Gewichtskraft unten auf einem Förderer liegt. Wäre der Laser unterhalb der Photodetektoren angeordnet, würde er somit bereits durch kleine Materialmengen abgeschattet, so daß keine sinnvolle Messung des Materialvolumens möglich wäre.

Der Laser und die Photodetektoren können in einer Reihe übereinander angeordnet sein, was eine optimale Erfassung des Materials erlaubt.

In einer bevorzugten Ausführungsform finden vier Photodetektoren und ein einziger Laser in jeder der Einheiten Verwendung.

Weiterhin ist vorgeschlagen, daß jeder Photodetektor mit einem Photodetektorschaltkreis verbunden ist, der das Detektionssignal des Laserlichts nur dann zur weiteren Verarbeitung überträgt, wenn der gegenüberliegende Laser aktiviert (befeuert) wird. Auf diese Weise wird einer nachgeschalteten Einrichtung, insbesondere einem Mikroprozessor, keine Information über detektiertes Laserlicht übermittelt, das von dem Laser in derselben Einheit erzeugt wurde. Dazu bietet sich an, zur sequentiellen Aktivierung der Laser einen Schaltkreis vorzusehen, der sie aufeinanderfolgend aktiviert.

Vorzugsweise umfaßt der Sensor eine Master-Einheit und eine gegenüberliegende Slave-Einheit (Sklaven-Einheit), die elektrisch mit der Master-Einheit verbunden ist. Jede der Einheiten weist einen Laser und wenigstens zwei Photodetektoren auf. Letztere werden nur betrieben, wenn der gegenüberliegende Sensor aktiviert wird. Die Master-Einheit kann weiterhin mit einem Mikroprozessor ausgestattet sein, der den Betrieb des Sensors steuert. Die Master-Einheit und die Slave-Einheit sind vorzugsweise im wesentlichen identisch.

Im konkreten kann der Mikroprozessor eine Rechteckschwingung erzeugen, die fortlaufend von einem Hochpegel auf einen Niedrigpegel wechselt. Der Laser wird bei Hochpegeln aktiviert, und die Photodetektoren können bei Niedrigpegeln betrieben werden. Wenn daher die Laser der Master-Einheit bei Hochpegeln aktiviert werden, werden die Photodetektoren der Master-Einheit nicht betrieben, da sie ebenfalls einen Niedrigpegel empfangen haben. Die Slave-Einheit kann elektrisch mit der Master-Einheit verbunden und mit einem Inverter ausgestattet sein, der die Hochpegel-Niedrigpegel-Schwingungen des Mikroprozessors invertiert. Der Inverter wandelt im wesentlichen die Hochpegelsignale des Mikroprozessors in Niedrigpegelsignale um, und Hochpegelsignale in Niedrigpegelsignale. Auf diese Weise wird der Laser der Master-Einheit betrieben, wenn der Mikroprozessor ein Hochpegelsignal abgegeben hat, und die Photodetektoren der gegenüberliegenden Slave-Einheit werden getriggert, da das Hochpegelsignal in ein Niedrigpegelsignal umgewandelt wurde. In ähnlicher Weise können die Photodetektoren der Master-Einheit getriggert und der Laser der gegenüberliegenden Slave-Einheit betrieben werden, da das Niedrigpegel-Signal in ein Hochpegel-Signal invertiert wurde. Es wurde herausgefunden, daß ein Mikroprozessor, der eine Rechteckschwingung von 400 Hz abgibt, befriedigende Signale bereitstellt.

Schließlich wird empfohlen, sowohl die Master-Einheit als auch die Slave-Einheit mit einer schützenden Linse aus Polyethylen mit ultrahohem Molekulargewicht zu versehen. Diese Linse kann sich in den Förderer erstrecken und durch das Material aus makroskopischen Teilchen gereinigt werden, das an der Linse vorbeigeführt wird.

In den Zeichnungen ist ein nachfolgend näher beschriebenes Ausführungsbeispiel der Erfindung dargestellt. Es zeigt:
- Fig. 1: eine halbschematische Ansicht eines landwirtschaftlichen Mähdreschers von der rechten Seite;
- Fig. 2: eine teilgeschnittene Seitenansicht eines Sensors und seiner Anordnung in einem Abschnitt eines Überkehr-Elevators;
- Fig. 3: eine perspektivische Ansicht der Master-Einheit des Sensors;
- Fig. 4: ein elektronisches Blockschaltbild des Sensors; und
- Fig. 5: ein elektrisches Schaltschema des Photodetektorschaltkreises.

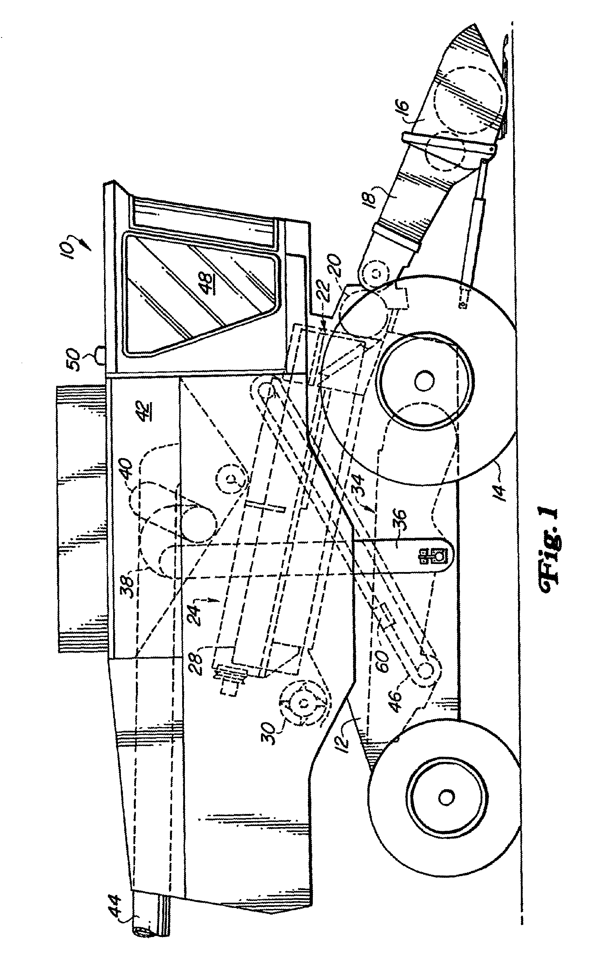

Figur 1 zeigt einen landwirtschaftlichen Mähdrescher 10 mit einem Chassis 12 und sich von diesem erstreckenden Bodenlaufrädern 14. Eine Erntegutbergungsvorrichtung 16 wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlaßübergangsbereich 22 an eine Axialtrennvorrichtung 24 weiter. Die Axialtrennvorrichtung 24 ist zwischen Seitenwänden des Mähdreschers 10 angeordnet. Die Seitenwände stellen ein Teil des Chassis 12 dar. Obwohl die Erfindung als an einem Axialmähdrescher angebracht beschrieben wird, kann sie auch an anderen Mähdreschern mit einem Elevator für sauberes Korn und/oder einem Überkehrelevator verwendet werden, wie an konventionellen Strohschüttler-Mähdreschern.

Die Axialtrennvorrichtung 24 umfaßt ein axiales Rotorgehäuse 26 und einen im Rotorgehäuse 26 angeordneten axialen Rotor 28. Das geerntete Gut tritt durch den Einlaßübergangsbereich 22 in das Rotorgehäuse 26 ein. Der Rotor 28 ist mit einem Beschickungsabschnitt, einem Dreschabschnitt und einem Trennabschnitt versehen. Das Rotorgehäuse 26 weist einen entsprechenden Beschickungsteil, einen Dreschteil und einen Trennteil auf.

Beide Gutbearbeitungsabschnitte des Rotors 28, der Dreschabschnitt und der Trennabschnitt, sind mit Gutmitnehmerzusammenbauten ausgestattet. Der Dreschabschnitt des Rotorgehäuses 26 ist mit einem Dreschkorb ausgestattet und der Trennabschnitt mit einem Rost versehen. Korn, einschließlich ungedroschener Getreideähren, Spreu und anderes Erntegutmaterial werden aus der Erntegutmatte gelöst und fallen durch den Dreschkorb und das Rost in ein Reinigungssystem 34. Größeres Erntegutmaterial wird an der Rückseite der Axialtrennvorrichtung 24 durch eine Abgabetrommel 30 ausgestoßen.

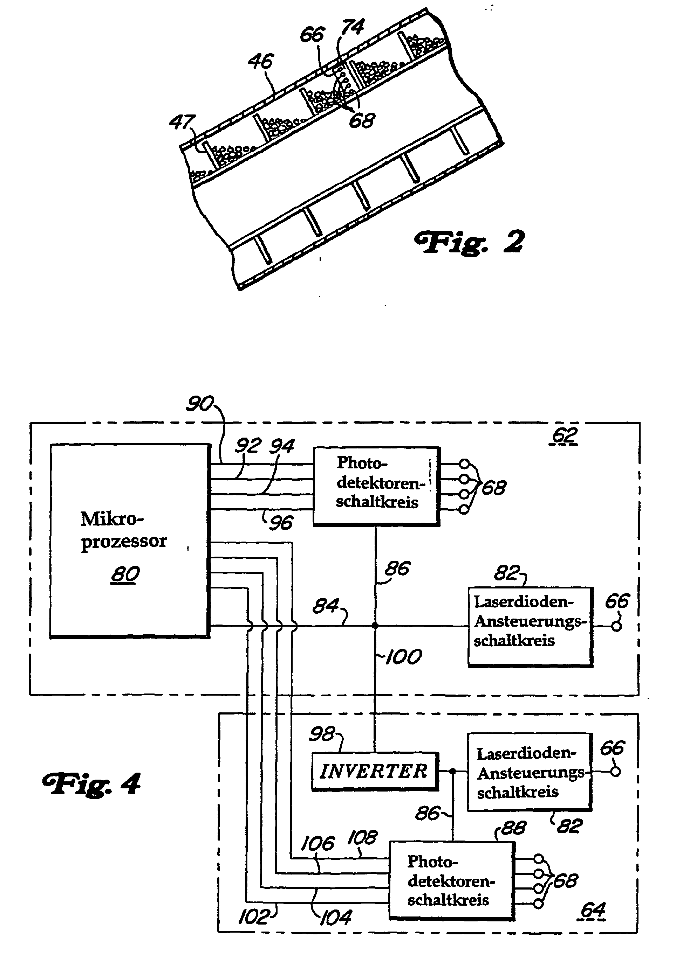

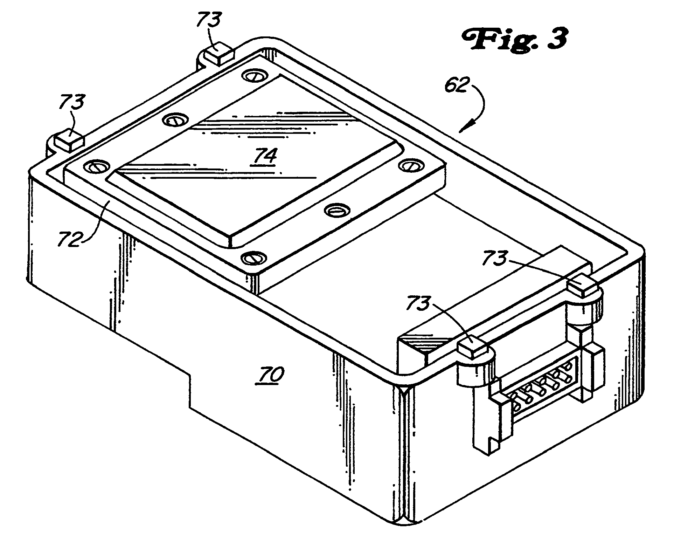

Wie in Figur 1 dargestellt, werden durch den Dreschkorb und das Rost fallendes Korn und Spreu in das Reinigungssystem 34 geleitet, das die Spreu von den Körnern entfernt. Das Reinigungssystem 34 ist mit einem Gebläse ausgestattet, das Spreu zur Rückseite des Mähdreschers 10 herausbläst. Das schwerere saubere Korn wird durch einen quer eingebauten Schneckenförderer für sauberes Korn einem Paddel-Elevator 36 für sauberes Korn zugeführt. Der Paddel-Elevator 36 leitet das Korn aufwärts in ein Übergangsgehäuse 38, in dem das Korn einem Ladeschneckenförderer 40 zum Beladen eines Korntanks 42 für sauberes Korn zugeführt wird. Das Korn wird aus dem Korntank 42 durch einen Entladeschneckenförderer 44 entfernt. In ähnlicher Weise werden nicht durch die Siebe (Rost und Dreschkorb) fallendes Korn, ungedroschene Getreideähren und anderes Erntegutmaterial durch einen Überkehrquerschneckenförderer gesammelt, der diese Überkehr einem Überkehr-Paddel-Elevator 46 zuführt. Wie am besten in Figur 2 dargestellt ist, ist der Überkehr-Paddel-Elevator 46 mit einer Reihe kettengetriebener Paddel 47 ausgestattet, auf welchen die Überkehr transportiert wird. Der Überkehr-Paddel-Elevator 46 leitet die Überkehr zu einem quer eingebauten Überkehr-Schneckenförderer, der in der Nähe des Dreschabschnitts der Axialtrennvorrichtung 24 angeordnet ist, um die Überkehr wieder in die Axialtrennvorrichtung 24 einzuspeisen. Der Betrieb des Mähdreschers 10 wird von der Bedienerkabine 48 aus gesteuert. Ein Radioempfänger 50 zum Empfang von GPS-Signalen ist oberhalb der Bedienerkabine positioniert, so daß die Sensordaten des Sensors mit den GPS-Signaldaten kombiniert werden kann, um eine Erntegutkartierungsoption bereitzustellen.

Die folgende Beschreibung der bevorzugten Ausführungsformen bezieht sich auf einen Volumen-Sensor 60 im Überkehr-Elevator 46 des Mähdreschers. Es ist jedoch anzumerken, daß der Sensor 60 auch im Elevator 36 für sauberes Korn angeordnet sein könnte. Der Sensor 60 verwendet Laser-Licht, um das auf den einzelnen Paddeln aufgehäufte Erntegutmaterial abzutasten, wenn sie an der Position des Sensors 60 vorbeiziehen. Der Sensor 60 der vorliegenden Erfindung könnte zur Messung der volumetrischen Flußrate jedes granularen Materials oder makroskopischer Teilchen verwendet werden, das durch einen Paddel-Elevator vorbeigeführt wird.

Es ist für den Landwirt oder den Bediener in der Bedienerkabine 48 vorteilhaft, über eine Anzeige der Menge der Überkehr und/oder des sauberen Korns, die oder das durch die Elevatorensysteme des Mähdreschers 10 befördert werden, zu verfügen, um Verstopfungen vermeiden und das Aufrechterhalten geeigneter Einstellungen des Mähdreschers 10 unterstützen zu können. Außerdem ist es nützlich, über eine volumetrische Messung (im Gegensatz zu einer anderen Messung, wie der der Masse) zu verfügen, da die Erntegutausbeute in Litern (oder anderen Volumenmaßeinheiten) gemessen wird, was eine volumetrische Einheit ist.

Der am Überkehr-Elevator 46 angebrachte Volumen-Sensor 60 umfaßt zwei Einheiten, eine Master-Einheit 62 und eine Slave-Einheit 64. Diese Einheiten 62, 64 sind auf je einer Seite des Überkehr-Elevators 46 befestigt und sind im wesentlichen parallel und einander gegenüber angeordnet. Jede Einheit 62, 64 ist mit einer lichtemittierenden Laserdiode 66 (beispielsweise, aber nicht beschränkt auf, EG&G Optoelectronics C86137E oder Siemens Typ SPL PL85) und vier lichtemittierenden Dioden, die Photodetektoren 68 darstellen, ausgestattet. Die Laserdiode 66 und die Photodetektoren 68 sind in einer parallel zu den Paddeln des Überkehr-Elevators 46 verlaufenden Reihe angeordnet. Die Laserdiode 66 ist die höchste, und die vier Photodetektoren erstrecken sich von ihr aus nach unten.

Dadurch, daß die Laserdioden 66 am höchsten Punkt angeordnet sind und einander gegenüberliegen, kann die transversale Neigung des Überkehrhaufens auf dem Paddel erfaßt werden. Wenn das Seitenprofil des Materials, die Breite der Umhüllung des Elevators und die Zeit und der Abstand zwischen den Paddeln bekannt ist, kann die Volumenflußrate des Überkehr-Materials bestimmt werden.

Der Sensor 60 ist in einem Gehäuse 70 mit einer offenen Seite enthalten. Die offene Seite des Gehäuses 70 ist die an der äußeren Umhüllung des Überkehr-Elevators 46 anliegende Oberfläche. Ein Teil der offenen Seite ist mit einer Flächenplatte 72 ausgestattet, wobei der frei bleibende Teil einer im Gehäuse 70 angeordneten Schaltkreisplatte vergossen ist, so daß das Gehäuse versiegelt ist. Die Flächenplatte 42 ist aus einem Polyethylen (UHMWP) mit einem ultrahohen Molekulargewicht hergestellt, das für hohe Verschleißfestigkeit und Widerstandskraft gegen Abschleifen geschaffen worden ist. Das ausgewählte Polyethylen hat auch geeignete optische Eigenschaften, d. h. es ist streuend und der (einheitslose) Brechungsindex ist 1,54. Die Laserdiode 66 und die Photodetektoren 68 sind in der Nähe oder in direktem Kontakt mit der Rückseite der Flächenplatte 72 positioniert und weisen von dort aus nach außen. Die Flächenplatte 42 stellt eine schützende Linse für die Laserdiode 66 und die Photodetektoren 68 dar. Es wurde herausgefunden, daß die Dicke der Flächenplatte 72 die von den gegenüberliegenden Photodetektoren 68 detektierte Ausgangsleistung der Laserdiode 66 beeinflussen kann. Es wurde herausgefunden, daß eine Flächenplatte von 2,0 mm Dicke befriedigend arbeitet.

Die Flächenplatte 72 ist mit einem erhabenen Vorsprung 74 geformt, der eine schützende Linse für die Laserdiode 66 und die Photodetektoren 68 ist. Das Gehäuse 70 ist an der äußeren Oberfläche des Überkehr-Elevators 46 durch Befestigungsbolzen 73 derart befestigt, daß der erhabene Vorsprung 74 durch einen Ausschnitt im Überkehr-Elevator 46 paßt. Der Überkehr-Elevator ist groß genug, um die Größe und Form des erhabenen Vorsprungs 74 aufzunehmen. Der erhabene Vorsprung 74 ist so gestaltet, daß er dicker als das Blechmaterial der Umhüllung des Überkehr-Elevators ist (beispielsweise doppelt so dick wie das Blechmaterial). Diese Gestaltung erlaubt, die Fläche des erhabenen Vorsprungs 74 in vergrößertem Maß dem Überkehrmaterial auszusetzen, was als Selbstreinigungsmechanismus für die Flächenplatte 72 wirkt. Der erhabene Vorsprung 74 ist mit abgeschrägten Kanten 76 versehen, um eine scharfe Kante im Überkehr-Elevator 46 zu vermeiden.

Jede der Laserdioden 66 emittiert infrarote oder nah-infrarote Lichtpulse (z. B. 905 nm). Die Laserdioden 66 werden aufeinanderfolgend mit einer vorbestimmten Frequenz von 400 Hz gepulst. Wenn die Laserdioden 66 gepulst werden, ist das emittierte Licht kohärent, mit einer räumlichen Verteilung in Form einer Gauss-Kurve. Das Licht beleuchtet den gesamten Innenraum des nicht gefüllten Überkehr-Elevators 46 zwischen der betriebenen Laserdiode 66 und den gegenüberliegenden Photodetektoren 68.

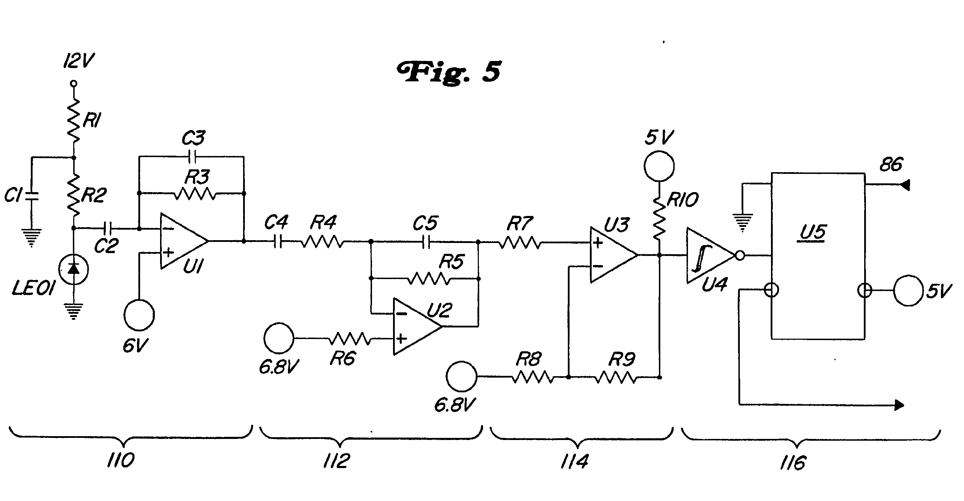

Figur 4 ist ein Blockdiagramm der Elektronik des Volumen-Sensors 60. Die Master-Einheit 62 ist mit einem Mikroprozessor 80 ausgestattet, der mit einer konventionellen Stromversorgung betrieben wird. Der Mikroprozessor 80 ist derart programmiert, daß er durch die Leitung 84 eine (zwischen einem Hoch- und Niedrigpegel variierende) Rechteckschwingung mit einer Frequenz von 400 Hz auf einen Laserdioden-Ansteuerungsschaltkreis 82 überträgt. Die Leitung 86 ist mit der Leitung 84 verbunden und koppelt einen Photodetektorschaltkreis 88 der Master-Einheit 62 an den 400 Hz-Ausgang des Mikroprozessors 80. Wie oben diskutiert, wird die Laserdiode 66 aktiviert, wenn der Laserdioden-Ansteuerungsschaltkreis 82 ein Hochpegel-Signal empfängt. Wenn der Photodetektorschaltkreis 88 ein Hochpegel-Signal empfängt, wird der Photodetektorschaltkreis 88 nicht getriggert und der Mikroprozessor 80 erhält kein Ausgangssignal vom Photodetektorschaltkreis 88 der Master-Einheit 62. Analog wird die Laserdiode 66 nicht betrieben, wenn der Laserdioden-Ansteuerungsschaltkreis 82 ein Niedrigpegel-Signal empfängt. Das Niedrigpegel-Signal triggert den Photodetektorschaltkreis 88, der von der Laserdiode 66 der Slave-Einheit 64 abgestrahltes Licht detektiert, wenn er nicht durch Überkehr abgeschirmt wird, und diese Information über Leitungen 90, 92, 94 und 96 zum Mikroprozessor 80 zurücksendet.

Die Slave-Einheit 64 ist mit einem Inverter 98 ausgestattet, der die über eine Leitung 100 empfangene (zwischen einem Hoch- und Niedrigpegel variierende) Rechteckschwingung mit 400 Hz invertiert und Hochpegel in Niedrigpegel sowie Niedrigpegel in Hochpegel umwandelt. Wie bei der Master-Einheit 62 wird der Laserdioden-Ansteuerungsschaltkreis 82 der Slave-Einheit 64 durch Hochpegel-Signale angesteuert und der Photodetektorschaltkreis 88 durch Niedrigpegel-Signale. Da diese Signale durch den Inverter 98 invertiert werden, steuert ein Hochpegel-Signal des Mikroprozessors 80 den Laserdioden-Ansteuerungsschaltkreis 82 der Master-Einheit 62 an und triggert den Photodetektorschaltkreis 88 der Slave-Unit. Die von den Photodetektoren 68 der Slave-Einheit 64 detektierte Information wird durch Leitungen 102, 104, 106 und 108 auf den Mikroprozessor 80 zurück übertragen. Ein Niedrigpegel-Signal des Mikroprozessors 80 triggert den Photodetektorschaltkreis 88 der Master-Einheit 62 und aktiviert den Laserdioden-Ansteuerungsschaltkreis 82 der Slave-Einheit 64.

Die Laserdioden-Ansteuerungsschaltkreise 82 der Master-Einheit 62 und der Slave-Einheit 64 sind konventionellen Aufbaus. Die Photodetektorenschaltkreise 88 der Master-Einheit 62 und der Slave-Einheit 64 sind im wesentlichen identisch mit dem in Figur 5 dargestellten Photodetektorenschaltkreis 88 für einen der Photodetektoren 68. Jeder Photodetektorschaltkreis 88 ist mit einem Photoverstärker 110 ausgestattet, der das vom Photodetektor 68 ausgegebene Signal verstärkt, einer zweiten Verstärkerstufe 112, die das entstandene Signal des Photodetektors 68 weiter verstärkt, einem Analog-Digital-Konverter 114 zum Konvertieren des analogen Signals in ein digitales Signal, und einem Logikschaltkreis 116 zum Weiterleiten des digitalisierten Ausgangssignals an den Mikroprozessor 80, wenn der Logikschaltkreis ein Niedrigpegel-Signal empfängt.

Die als Photodetektor 68 verwendete Photodiode LED 1 produziert einen negativen Stromimpuls, wenn sie Licht nachweist. Dieses Signal wird durch den Photoverstärker 110 mit einer Verstärkung von 100 verstärkt, was in einem Impuls positiver Spannung resultiert. Dieser Impuls positiver Spannung wird dann durch die zweite Verstärkerstufe 112 mit einer Verstärkung von 100 in einen Impuls negativer Spannung verstärkt, der dem Analog-Digital-Konverter 114 zugeführt wird. Das digitalisierte Signal wird dem Logikschaltkreis 116 zugeführt, in dem es durch einen Inverter U4 invertiert wird und das Flip-Flop U5 mit ihm beaufschlagt wird. Das Flip-Flop U5 signalisiert dem Mikroprozessor durch eine geeignete Leitung (90, 92, 94, 96, 102, 104, 106, 108) die durch die Photodiode LED 1 detektierte Gegenwart von Licht, wenn das Flip-Flop U5 der Master-Einheit 62 über die Leitung 86 direkt vom Mikroprozessor 80 (oder das Flip-Flop U5 der Slave-Einheit 64 vom Inverter 98) einen Niedrigpegel-Impuls empfängt.

Die Komponenten eines einzelnen Photodetektorenschaltkreises 88 sind in Tabelle 1 aufgeführt und werden als Beispiel eines geeigneten Schaltkreises für die vorliegende Erfindung offenbart.

**Tabelle 1**

| | |
|---|---|
| C1, C4 | Kondensator 0,1 µF, 50 Volt, Gehäusetyp 08 |
| C2 | Kondensator 1000 pF, 50 Volt, Gehäusetyp 08 |
| C3 | Kondensator 5 pF, 50 Volt, Gehäusetyp 08 |
| C5 | Kondensator 15 pF, 50 Volt, Gehäusetyp 08 |
| | |
| R1 | Widerstand 4,99 kΩ, 1/10 Watt, 1 % |
| R2, R8 | Widerstand 30,1 kΩ, 1/10 Watt, 1 % |
| R3, R5, R9 | Widerstand 100 kΩ, 1/10 Watt, 1 % |
| R4, R6 | Widerstand 1,0 kΩ, 1/10 Watt, 1 % |
| R7 | Widerstand 243 kΩ, 1/10 Watt, 1 % |
| R10 | Widerstand 10 kΩ, 1/10 Watt, 1 % |
| | |
| U1, U2 | 1/4 Operationsverstärker Motorola MC33074D |
| U3 | 1/4 Operationsverstärker National LM2901 |
| U4 | 1/4 Sechsfachinverter Motorola MX74HC14 |
| U5 | 1/4 Dual-D-Flip-Flop mit Set/Reset MC74HC74AD |

Es ist nochmals anzumerken, daß Figur 5 einen Photodetektorenschaltkreiskanal für einen Photodetektor 68 repräsentiert. Die Operationsverstärker U1, U2, U3 und der Inverter U4 werden gemeinsam mit den anderen Photodetektorenschaltkreisen 88 in der Master-Einheit 62 oder Slave-Einheit 64 der jeweiligen Photodetektoren 66 verwendet. In ähnlicher Weise wird das duale Flip-Flop U5 mit dem benachbarten Photodetektor 68 geteilt und ein weiteres Flip-Flop U5 ist für die verbleibenden Photodetektoren 68 in der jeweiligen Master-Einheit 62 oder Slave-Einheit 64 bereitgestellt.

Die vorliegende Erfindung ist nicht auf die oben beschriebenen Ausführungsformen beschränkt, sondern soll nur durch die folgenden Ansprüche eingeschränkt werden.

## Patentansprüche

1. Landwirtschaftlicher Mähdrescher (10) mit einem Förderer, durch den geerntetes Material gefördert wird, und einem volumetrischen Sensor (60) zum Erfassen von im Förderer geförderten Materialvolumina, der wenigstens zwei gegenüberliegende Einheiten (62, 64) aufweist, die an gegenüberliegenden Seiten einer Umhüllung des Förderers montiert sind und Lichtschranken bilden, **dadurch gekennzeichnet, dass** jede der Einheiten (62, 64) mit einem einzigen Laser und jeweils wenigstens zwei Photodetektoren (68) zur Detektion des abgestrahlten Lichts des Lasers ausgestattet ist, die ein Detektionssignal abgeben, das anzeigt, ob der Photodetektor (68) Laserlicht vom gegenüberliegenden Laser detektiert hat.

2. Mähdrescher (10) nach Anspruch 1, wobei der Förderer ein Paddelelevator (46) ist.

3. Mähdrescher (10) nach einem der Ansprüche 1 oder 2, wobei die Laser oberhalb der Photodetektoren (68) angeordnet sind.

4. Mähdrescher (10) nach einem der Ansprüche 1 bis 3, wobei der Laser und die Photodetektoren (68) in einer Reihe angeordnet sind.

5. Mähdrescher (10) nach einem der Ansprüche 1 bis 4, wobei jede der Einheiten (62,64) mit vier Photodetektoren (68) ausgestattet ist.

6. Mähdrescher (10) nach einem der Ansprüche 1 bis 5, wobei die Laser aufeinanderfolgend aktiviert werden und die Photodetektoren (68) mit einem Schaltkreis verbunden sind, der die Detektionssignale der Photodetektoren (68) unterbindet, wenn der gegenüberliegende Laser nicht aktiviert ist.

7. Mähdrescher (10) nach Anspruch 6, wobei die gegenüberliegenden Laser mit einem Schaltkreis verbunden sind, der sie aufeinanderfolgend aktiviert.

8. Mähdrescher (10) nach einem der Ansprüche 1 bis 7, wobei eine der Einheiten eine Master-Einheit (62) ist, die mit einem Mikroprozessor (80) zur Steuerung der Aktivierung der Laser und zum Empfang der Detektionssignale der Photodetektoren (68) ausgestattet ist, und die gegenüberliegende Einheit eine Slave-Einheit (64) ist, die elektrisch mit der Master-Einheit (62) verbunden ist.

9. Mähdrescher (10) nach Anspruch 8, wobei der Mikroprozessor (80) den Lasern ein Rechtecksignal zur Aktivierung der Laser bereitstellt, und das Signal für einen der Laser invertiert wird, so daß die Laser aufeinanderfolgend Licht abstrahlen.

10. Mähdrescher (10) nach Anspruch 9, wobei jeder Photodetektor (68) mit einem Photodetektionsschaltkreis (88) ausgestattet ist, der ebenfalls das Rechtecksignal vom Mikroprozessor (80) empfängt, und das Detektionssignal dem Mikroprozessor (80) freigibt, wenn der gegenüberliegende Laser aktiviert wird.

11. Mähdrescher (10) nach einem der Ansprüche 1 bis 10, wobei der Sensor (60) eine schützende Linse (72), die aus Polyethylen mit hohem Molekulargewicht hergestellt ist, aufweist.

12. Mähdrescher (10) nach einem der Ansprüche 1 bis 11, wobei der Sensor (60) eine schützende Linse (72) aufweist, die in den Förderer vorspringt.

## Claims

1. An agricultural combine harvester (10) with a conveyor through which harvested material is conveyed, and a volumetric sensor (60) for detecting material volumes conveyed in the conveyor, comprising at least two opposite units (62, 64) which are mounted on opposite sides of an enclosure of the conveyor and form light barriers, **characterized in that** each of the units (62, 64) is equipped with a single laser and at least two photodetectors (68) each for detecting the radiated light of the laser, which provide a detection signal which indicates whether the photodetector (68) has detected laser light from the opposite laser.

2. A combine harvester (10) according to claim 1, wherein the conveyor is a paddle elevator (46).

3. A combine harvester (10) according to claim 1 or 2, wherein the lasers are arranged above the photodetectors (68).

4. A combine harvester (10) according to any of claims 1 to 3, wherein the laser and the photodetectors (68) are arranged in a row.

5. A combine harvester (10) according to any of claims 1 to 4, wherein the each of the units (62, 64) is equipped with four photodetectors (68).

6. A combine harvester (10) according to any of claims 1 to 5, wherein the lasers are activated sequentially and the photodetectors (68) are connected to a circuit which blocks the detection signals of the photodetectors (68) when the opposite laser is not activated.

7. A combine harvester (10) according to claim 6, wherein the opposite lasers are connected to a circuit which activates them sequentially.

8. A combine harvester (10) according to any of claims 1 to 7, wherein one of the units is a master unit (62) which is equipped with a microprocessor (80) for controlling the activation of the lasers and reception of the detection signals of the photodetectors (68), and the opposite unit is a slave unit (64) which is electrically connected to the master unit (62).

9. A combine harvester (10) according to claim 8, wherein the microprocessor (80) provides a square-wave signal for activating the lasers and the signal for one of the lasers is inverted so that the lasers radiate light sequentially.

10. A combine harvester (10) according to claim 9, wherein each photodetector (68) is equipped with a photo-detection circuit (88) which also receives the square-wave signal from the microprocessor (80) and enables the detection signal to the microprocessor (80) when the opposite laser is activated.

11. A combine harvester (10) according to any of claims 1 to 10, wherein the sensor (60) has a protective lens (72) which is made from polyethylene with a high molecular weight.

12. A combine harvester (10) according to any of claims 1 to 11, wherein the sensor (60) has a protective lens (72) which projects into the conveyor.

## Revendications

1. Moissonneuse-batteuse (10) agricole, comportant un convoyeur, qui transporte les végétaux récoltés, et un capteur volumétrique (60), qui détecte le volume de végétaux transporté dans le convoyeur et qui comporte au moins deux unités (62, 64) face à face, qui sont montées sur des côtés opposés d'une enveloppe du convoyeur et forment des barrières lumineuses, **caractérisée en ce que** les unités (62, 64) sont équipées chacune d'un seul laser et respectivement d'au moins deux photodétecteurs (68), qui sont destinés à détecter la lumière émise par le laser et délivrent un signal de détection qui indique si le photodétecteur (68) a détecté ou non une lumière laser émise par le laser en face.

2. Moissonneuse-batteuse (10) selon la revendication 1, dans laquelle le convoyeur est un élévateur à palettes (46).

3. Moissonneuse-batteuse (10) selon la revendication 1 ou 2, dans laquelle les lasers sont disposés au-dessus des photodétecteurs (68).

4. Moissonneuse-batteuse (10) selon l'une quelconque des revendications 1 à 3, dans laquelle le laser et les photodétecteurs (68) sont montés en série.

5. Moissonneuse-batteuse (10) selon l'une quelconque des revendications 1 à 4, dans laquelle chacune des unités (62, 64) est équipée de quatre photodétecteurs (68).

6. Moissonneuse-batteuse (10) selon l'une quelconque des revendications 1 à 5, dans laquelle les lasers sont activés successivement et les photodétecteurs (68) sont reliés à un circuit qui neutralise les signaux de détection des photodétecteurs (68) lorsque le laser en face n'est pas activé.

7. Moissonneuse-batteuse (10) selon la revendication 6, dans laquelle les lasers face à face sont reliés à un circuit qui les active successivement.

8. Moissonneuse-batteuse (10) selon l'une quelconque des revendications 1 à 7, dans laquelle l'une des unités est une unité maître (62), qui est équipée d'un microprocesseur (80) destiné à commander l'activation des lasers et à recevoir les signaux de détection des photodétecteurs (68), et l'unité en face est une unité esclave (64), qui est reliée électriquement à l'unité maître (62).

9. Moissonneuse-batteuse (10) selon la revendication 8, dans laquelle le microprocesseur (80) délivre aux lasers un signal rectangulaire destiné à activer le laser, et le signal pour l'un des lasers est inversé de telle sorte que les lasers émettent successivement de la lumière.

10. Moissonneuse-batteuse (10) selon la revendication 9, dans laquelle chaque photodétecteur (68) est équipé d'un circuit de photodétection (88), qui reçoit également le signal rectangulaire du microprocesseur (80), et libère le signal de détection vers le microprocesseur (80) lorsque le laser en face est activé.

11. Moissonneuse-batteuse (10) selon l'une quelconque des revendications 1 à 10, dans laquelle le capteur (60) comporte une lentille protectrice (72) qui est réalisée en polyéthylène avec un poids moléculaire élevé.

12. Moissonneuse-batteuse (10) selon l'une quelconque des revendications 1 à 11, dans laquelle le capteur (60) comporte une lentille protectrice (72) qui s'avance en saillie dans le convoyeur.
